(19) Europäisches Patentamt / European Patent Office / Office européen des brevets

(11) **EP 4 143 505 B1**

(12) **FASCICULE DE BREVET EUROPEEN**

(45) Date de publication et mention de la délivrance du brevet:
**04.09.2024   Bulletin 2024/36**

(21) Numéro de dépôt: **21721108.5**

(22) Date de dépôt: **27.04.2021**

(51) Classification Internationale des Brevets (IPC):
**G01B 9/02** *(2022.01)*    **G01B 11/24** *(2006.01)*
**G01B 11/30** *(2006.01)*    **G01B 9/02001** *(2022.01)*
**G01B 9/02015** *(2022.01)*    **G01B 9/02055** *(2022.01)*

(52) Classification Coopérative des Brevets (CPC):
**G01B 11/303; G01B 9/02007; G01B 9/02022; G01B 9/02028; G01B 9/02045; G01B 9/02082; G01B 9/02083; G01B 9/02084; G01B 9/02087; G01B 11/2441**

(86) Numéro de dépôt international:
**PCT/EP2021/060969**

(87) Numéro de publication internationale:
**WO 2021/219629 (04.11.2021 Gazette 2021/44)**

(54) **PROCEDE D'OBTENTION DU PROFIL D'UNE SURFACE EN MOUVEMENT PAR RAPPORT AU SYSTEME**

VERFAHREN ZUR ERMITTLUNG DES PROFILS EINER RELATIV ZU DEM SYSTEM BEWEGTEN OBERFLÄCHE

METHOD FOR OBTAINING THE PROFILE OF A SURFACE MOVING IN RELATION TO THE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.04.2020   FR 2004164**

(43) Date de publication de la demande:
**08.03.2023   Bulletin 2023/10**

(73) Titulaires:
• **COMPAGNIE GENERALE DES ETABLISSEMENTS MICHELIN**
  **63000 Clermont-Ferrand (FR)**
• **CENTRE NATIONAL DE LA RECHERCHE SCIENTIFIQUE**
  **75794 Paris Cedex 16 (FR)**
• **UNIVERSITE PAUL SABATIER TOULOUSE III**
  **31062 Toulouse Cedex 9 (FR)**
• **Institut National Polytechnique de Toulouse**
  **31029 Toulouse Cedex 4 (FR)**

(72) Inventeurs:
• **GRIMALDI, Bastien**
  **20135 Conca (FR)**
• **BREMOND, Florian**
  **63040 Clermont-Ferrand Cedex 9 (FR)**
• **COTE, Remi**
  **63040 Clermont-Ferrand Cedex 9 (FR)**
• **BOSCH, Thierry**
  **31500 Toulouse (FR)**
• **BONY, Francis**
  **31590 Lavalette (FR)**
• **LOUBES, Jean-Michel**
  **31320 Pechbusque (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 0 208 276       EP-A1- 3 035 001**
**US-A1- 2011 126 617    US-A1- 2018 216 927**

**Description**

**Domaine de l'invention**

La présente invention concerne une méthode d'obtention du profil d'une surface d'un objet en mouvement.

**Arrière-plan technologique**

La connaissance du profil d'une surface d'un objet est utile pour plusieurs types d'application. Premièrement lorsque l'objet est en mouvement par rapport à un second objet, la connaissance de ce profil est nécessaire pour assurer la mobilité relative entre les deux objets. En effet, on peut déduire du profil de la surface la rugosité de celle-ci permettant d'adapter par exemple la vitesse relative entre les deux surfaces pour assurer une condition d'adhérence. Secondement lors de contrôle qualité d'un objet, la profilomètrie de la surface est un paramètre mis sous surveillance puisque c'est un signe d'évolution du procédé de fabrication par exemple. En raison de défaut de fabrication mais aussi du vieillissement ou de l'usure en service de la surface d'un objet ou des conditions externes variantes, il est utile de pouvoir avoir accès régulièrement à l'information du profil. Par exemple, dans le domaine du transport terrestre, la connaissance du profil du sol à une échelle millimétrique est importante pour adapter les systèmes de sécurité active du véhicule aux conditions d'adhérence du sol qui est fonction de la rugosité de surface du sol. De même, dans le domaine de la fabrication d'objet, il est utile de mesurer le profil de la surface externe des objets fabriqués pour s'assurer du respect du cahier des charges et adapter le procédé de fabrication en fonction de ce paramètre.

Ainsi, la connaissance en temps réel du profil d'une surface quelconque d'un objet est importante. Pour autant on souhaite des dispositifs de mesure du profil peu intrusifs physiquement par rapport à l'objet à évaluer ou par rapport au dispositif sur lequel il est susceptible d'être monté. De plus, il faut que le procédé soit peu impactant sur le fonctionnement actuel des dispositifs afin de ne pas affecter l'efficacité de ces dispositifs. Enfin, il faut qu'il soit potentiellement économe aussi bien à l'achat qu'à l'usage et peu consommateur d'énergie.

Parmi les dispositifs de mesure de la rugosité du sol, le rugolaser permet de mesurer des profils en dynamique. Le principe de mesure repose sur l'utilisation d'une source laser pulsée émise à la verticale en direction de la surface externe à mesurer. La source laser est couplée à une optique de focalisation et un potentiomètre optique de type CCD ou barrette de photorécepteurs. En fonction de la distance laser/cible, l'optique vient focaliser l'image du point d'impact du faisceau laser à une position donnée sur le capteur. En localisant cette position sur le potentiomètre, il est possible de remonter à la hauteur du profil de la cible.

L'inconvénient d'un tel dispositif réside dans l'encombrement en embarqué sur dispositif mobile, son coût d'achat et sa faible flexibilité de mesure par rapport à l'usage du dispositif mobile puisque les réglages du système et l'analyse des mesures nécessitent du temps et le post traitement est généralement fait ultérieurement à la mesure. Il n'est donc pas possible d'obtenir l'information en temps réel.

Parmi les dispositifs de mesure de rugosité de surface en termes de contrôle qualité d'un objet fabriqué, on peut citer les dispositifs d'imagerie et d'éclairage. Cependant, ce type d'équipement n'est pas adapté à un contrôle qualité en continu puisque le temps de traitement consomme du temps de flux et l'objet est généralement en statique ou quasi statique. Bien qu'il permette d'avoir accès à une observation tridimensionnelle de la surface externe de l'objet, ce traitement étant bien adapté à une logique qualité par tri aléatoire des objets, il ne l'est pas pour un contrôle qualité en continu de la totalité des objets.

US2011/126617A1 divulgue un système permettant de mesurer les paramètres d'un pneumatique par interférométrie laser à auto-mélange. EP3035001A1divulgue un dispositif et un procédé de détermination de la position absolue d'un objet se déplaçant, par interférométrie laser à auto-mélange.

La présente invention porte sur un procédé d'obtention du profil d'une surface sur un plan bidimensionnel exploitable en temps réel en résolvant les problèmes rencontrés par les procédés de l'état de l'art en matière de temps de réponse, ce qui signifie que le procédé est réalisé en condition embarquée sur le dispositif tout en étant économe en énergie et en ressource.

**Description de l'invention**

L'invention porte plus précisément sur un procédé d'obtention d'un profil d'une surface externe d'un milieu présentant un plan médian comprenant les étapes suivantes :

-   Obtenir deux signaux temporels A et B, issus d'un système de mesure ayant une vitesse relative V par rapport à une surface externe présentant un plan médian suivant une direction U, chaque signal est le résultat des interférences électromagnétiques entre une onde incidente et son onde rétrodiffusée par la surface externe suivant une ligne de lecture d'au moins une onde électromagnétique gaussienne, cohérente, directionnelle suivant au moins un parcours et focalisée en un point géométrique sur le au moins un parcours, les deux points géométriques d1 et d2 sont situés de part et d'autre du plan médian, la distance entre les deux points géométriques est supérieure à la plus grande des longueurs de Rayleigh de chaque onde, par rapport à la normale au plan médian, l'angle d'incidence de l'onde électromagnétique suivant chaque parcours sur la surface externe est supérieur à un degrés dans un plan défini par la normale au plan médian et la direction U; pour, à chaque instant, une même cible géométrique sur la ligne de lecture de la surface externe ;

- Déterminer au moins une fréquence Doppler associée à chaque signal temporel A et B ;

- Echantillonner chaque signal temporel A et B à une fréquence supérieure à 2 fois, préférentiellement 10 fois, la au moins une fréquence Doppler pour obtenir un signal utile ;

- Déterminer une enveloppe du signal utile de chaque signal A et B ;

- Effectuer une combinaison relative entre les enveloppes de chaque signal A et B pour obtenir une fonction F monotone et bijective ; et

- Déterminer le profil de la surface externe à l'aide d'une calibration de la fonction F

Comme chaque signal A et B est le résultat des interférences électromagnétiques sur un unique parcours, les signaux A et B sont bien le résultat des interférences électromagnétiques sur au moins un parcours. Comme chaque onde gaussienne et cohérente est focalisée sur le parcours en un point géométrique distinct l'un de l'autre de sorte que le premier point d1 est situé d'un côté du plan médian et l'autre point géométrique de l'autre côté du plan médian, une distance suivant la direction verticale au plan médian existe entre les deux points géométriques. De plus comme l'incidence des parcours est sensiblement vertical, la distance verticalement au plan médian est supérieure à la plus grande longueur de Rayleigh dont la distance entre les deux ondes est supérieure à la longueur de Rayleigh des ondes suivant les deux parcours. Enfin, chaque onde électromagnétique définit un angle d'incidence $\theta$ suivant chaque parcours à la surface externe par rapport à la normale au plan médian de la surface externe.

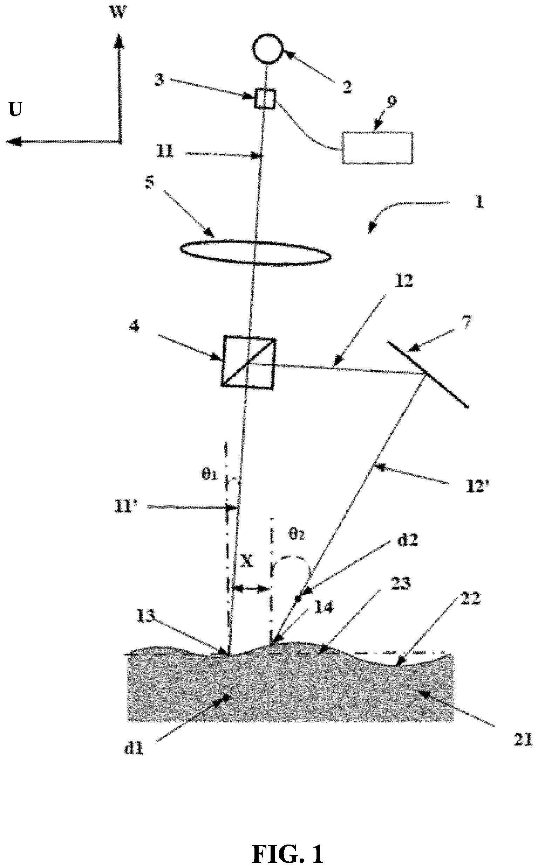

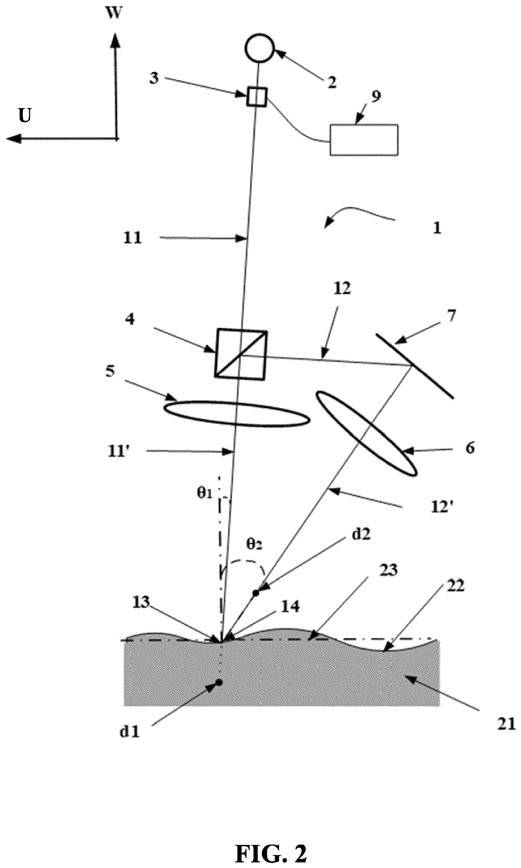

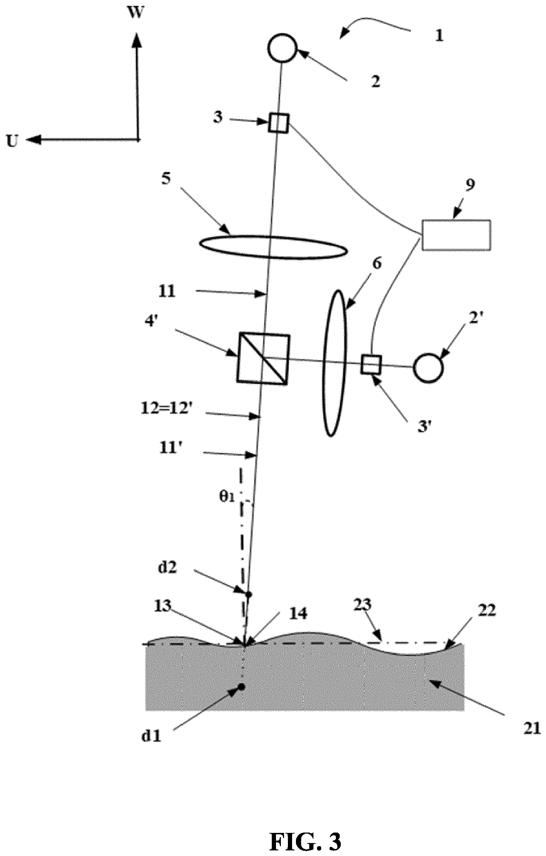

Ici, il faut tout d'abord avoir deux signaux temporels correspondant à chaque instant à la réponse du même point géométrique de la ligne de lecture sur la surface externe du milieu observé. Ceci est illustré directement par les systèmes des figures 2 et 3. Et dans le cas du système de la figure 1, il convient préalablement de réaliser une opération de phasage temporel des signaux issus du capteur du système pour prendre en compte le décalage X entre les deux parcours., De plus, dans les cas des systèmes des figures 1 et 2, l'utilisation d'un seul capteur avec un seule source d'onde électromagnétique nécessite que les angles d'incidences sur la surface externe soient différenciées tout en autant tous les deux supérieures à 1 degrés pour extraire du signal électrique du capteur deux signaux temporelles associées chacun à un parcours d'onde qui se différencie en terme de fréquence Doppler que par l'angle d'incidence $\theta$. Il faut réaliser les étapes suivantes :

- Récupérer le signal électrique d'un capteur i

- Extraire du signal électrique du capteur le signal associé au faisceau d'onde défini par son angle d'incidence $\theta$ en filtrant sélectivement le signal électrique autour du fondamental et/ou des harmoniques de la fréquence Doppler associés au faisceau d'onde pour obtenir un premier signal temporel

- Répéter l'étape pour la seconde fréquence Doppler et ses harmoniques associées pour extraire un second signal temporel

L'information utile est portée par le fondamental et les harmoniques de la fréquence Doppler, ce qui nécessite une inclinaison minimale à l'arrivée de l'onde incidente sur la surface externe. Par conséquent, il convient sur chaque signal de déterminer la fréquence Doppler. Celle-ci dépend à la fois de la vitesse relative V de déplacement dans la direction U entre le système et le milieu observé. Mais aussi, elle dépend de l'angle d'incidence $\theta$ par rapport à la normale au plan médian de la surface externe. Enfin, la fréquence Doppler est aussi fonction de la longueur d'onde $\lambda$ de l'onde électromagnétique. En connaissant l'ensemble de ces paramètres, on peut théoriquement déterminer la fréquence Doppler, son fondamental. Une autre solution consiste à analyser en fréquence le signal temporel pour déterminer la fréquence et ses harmoniques qui doivent aussi émerger de l'analyse fréquentielle du signal.

Ainsi, il est important que la fréquence d'échantillonnage des signaux temporels soit au moins supérieure à 2 fois la fréquence Doppler pour que le signal utile porte une information assurément fiable (traitement des signaux -Théorème de Shannon) sur le fondamental de la fréquence Doppler. Cependant selon les applications, l'information peut aussi être portée par les premières harmoniques de l'effet Doppler, il est alors préférable d'échantillonner suffisamment pour avoir une information fiable sur les harmoniques successives.

Ensuite pour extraire l'information de distance sur le signal utile, il faut tout d'abord extraire l'enveloppe du signal utile qui représente les variations extrêmes temporelles des interférences électromagnétiques enregistrées. Cette enveloppe peut être construite sur la valeur minimale du signal utile ou sur la valeur maximale du signal utile. En variante, on peut aussi prendre la valeur maximale de la valeur absolue de l'enveloppe qui oscille généralement autour de la valeur nulle. Ici, c'est l'amplitude du signal, par modulation d'amplitude, qui porte l'information utile ce qui justifie de prendre l'enveloppe du signal. De plus, cela permet un traitement rapide pour extraire l'information utile ce qui rend le procédé facile à mettre en oeuvre en embarqué au niveau du système de mesure.

Enfin, la dernière étape est la détermination du profil suivant la ligne de lecture de la surface externe. Pour cela, on crée une fonction F bijective comme étant une combinaison mathématique en relatif des enveloppes des signaux issus des deux parcours. L'avantage de la combinaison mathématique relative est qu'une étape de calibration peut être effectuée a priori à l'aide d'une cible représentative de la nature des milieux que l'on souhaite mesurer. La calibration ne nécessite pas alors d'employer des conditions similaires à la mesure souhaitée mais seulement de s'assurer de la proportionnalité des réponses entre les deux signaux. Le résultat de cette combinaison donne une grandeur qui au travers d'une fonction F monotone et bijective traduit une et une seule distance E relativement à un point de référence grâce à l'étape de calibration de la fonction F malgré que cette calibration n'ait pas été effectuée sur le milieu de mesure. Ainsi, on assure une mesure en temps réel du profil de n'importe quelle surface externe d'un milieu inconnue. Les variations de la distance E entre les points de la ligne de lecture permettent de générer automatiquement le profil de cette même ligne de lecture, ce qui permet un traitement en temps réel du profil puisque cela nécessite peu de ressources de calcul.

Ici, les ondes électromagnétiques qui peuvent être des ondes lumineuses par exemple doivent être cohérentes spatialement et temporellement pour obtenir des interférences entre l'onde incidente et l'onde rétrodiffusée. De plus, il faut que les ondes puissent être directionnelles pour contrôler la propagation des ondes en direction de la surface externe et faciliter aussi leurs interférences. Enfin, il faut aussi avoir la faculté de focaliser les ondes en un point géométrique donné sur le parcours de l'onde et que l'onde électromagnétique puisse être rétrodiffusée par la surface externe du milieu. On entend ici par le terme « ondes rétro diffusé » que celles-ci correspondent aux ondes incidentes qui sont réfléchies et/ou diffusées par la surface externe et qui suivent le même chemin que les ondes incidentes en sens inverse. De plus, il faut deux points géométriques différents où se focalisent les ondes électromagnétiques afin que la distance entre ces points soit supérieure à la longueur de Rayleigh, ce qui est une propriété d'une propagation gaussienne des ondes. Cette condition assure que les distances entre la surface externe et chaque point géométrique soit suffisamment différenciées pour que les variations entre les signaux A et B soient sensibles aux variations de distance. Ainsi chaque signal temporel contient une information distincte de distance. Bien entendu, il faut que la longueur d'onde des ondes électromagnétiques soit adaptée aux caractéristiques d'absorption du milieu, ce qui permet une rétrodiffusion optimale des ondes.

Selon un mode de réalisation particulier, l'étape d'obtention de deux signaux temporels A et B pour la même cible géométrique de la ligne de lecture comprend les étapes suivantes :

- Obtenir deux signaux temporels A et B pour, à chaque instant, deux cibles géométriques sur la ligne de lecture de la surface externe ;

- Etablir la distance X sur le plan médian suivant la direction U entre les deux cibles géométriques de la ligne de lecture ;

- Déterminer la vitesse relative V selon la direction U entre le système de mesure et la surface externe ;

- Déterminer la décalage temporel dT entre les deux signaux temporels associé à la distance X et la vitesse V ; et

- Appliquer au moins une partie du décalage temporel dT au signal temporel A et/ou au signal temporel B.

Le système de mesure des signaux représentatifs du profil de la surface externe ne phase pas forcément les premier et second signaux entre eux comme dans le cas de la figure 1 Dans ce cas, cette étape préparatoire des signaux est indispensable pour l'obtention de deux signaux temporels du même point de la ligne de lecture de la surface externe de manière robuste et fiable.

Avantageusement, la calibration de la fonction F s'effectue à l'aide d'au moins une cible blanche et rugueuse, dont la rugosité de surface est supérieure à la longueur d'onde des ondes électromagnétiques.

L'utilisation de la fonction F, combinaison mathématique relative des enveloppes des signaux A et B nécessite une phase de calibration de cette fonction F. Cette calibration peut être effectuée à l'aide d'une cible spécifique que l'on déplace de manière métrologique par rapport au système de mesure des signaux. Cette cible doit avantageusement être blanche et rugueuse. On entend ici par le terme « blanche » que la surface externe de la cible doit rétro diffuser plus qu'elle absorbe les ondes électromagnétiques. Et la quantité rétrodiffusée doit être aussi avantageusement au moins égale ou au-dessus du niveau rétro diffusé par la surface externe du milieu que l'on souhaite mesurer, ce qui garantit la proportionnalité de la réponse quel que soit le milieu à observer. Il est aussi nécessaire que cette cible ait une surface externe rugueuse afin de rétro diffuser et non seulement réfléchir les ondes électromagnétiques comme le ferait un miroir. Il convient que la rugosité de surface de la cible soit supérieure à la longueur d'onde des ondes électromagnétiques. En effet, si les rugosités de surfaces ne sont pas supérieures à la longueur d'onde, la surface va se comporter comme un miroir à la longueur d'onde en question, et donc minimiser la rétrodiffusion. De plus, le phénomène de speckle, c'est-à-dire le phénomène de tavelure électromagnétique et en particulier optique ne sera pas présent si la condition de rugosité n'est pas respectée, et il le faut pour pouvoir caractériser optionnellement le bruit de speckle, ou bruit de tavelure, c'est-à-dire le bruit généré par le phénomène de tavelure électromagnétique, tout en étant comparable à celui des cibles qu'on compte mesurer.

Préférentiellement, lequel l'étape de génération du signal utile comprend l'étape suivante :

- Filtrer par un fenêtrage fréquentiel chaque signal utile autour de la au moins une fréquence Doppler ;

Très préférentiellement, l'étape de génération du signal utile emploie un fenêtrage fréquentiel entre 0,7 et 1,3 fois la fréquence Doppler

Il est possible bien que non nécessaire de filtrer le signal temporel autour de la fréquence Doppler qui porte l'information utile pour isoler un signal temporel utile mettant en évidence les interférences électromagnétiques. L'incertitude sur la fréquence Doppler exacte conduit naturellement à réaliser un filtrage sélectif autour de la fréquence Doppler déterminée. L'incertitude potentielle sur la détermination de la fréquence Doppler conduit à filtrer le signal sur une largeur liée à la fréquence Doppler, le fenêtrage compris entre 0,7 et 1,3 fois la fréquence Doppler déterminée permet à la fois de couvrir l'incertitude sur la fréquence Doppler tout en se focalisant sur le seul fondamental qui généralement porte une information suffisante.

Préférentiellement, l'étape de détermination de la fréquence Doppler s'effectue par :

- Une transformée de fourrier du signal utile ; ou

- L'application d'une formule théorique prenant en compte la vitesse relative V suivant la direction U entre le système de mesure et la surface externe, l'angle d'incidence θ du faisceau émis sur le plan médian de la surface externe et la longueur d'onde λ des ondes électromagnétiques définie comme suit :

$$f = \frac{2 * V * \sin(\theta)}{\lambda}$$

;

ou

- Une analyse temporelle du signal temporel pour détecter la période entre deux créneaux ou la longueur du créneau.

Ces trois méthodes permettent de déterminer une fréquence Doppler du signal temporel. La deuxième méthode consiste simplement à évaluer théoriquement la fréquence Doppler en connaissant les caractéristiques techniques du système de mesure. La première méthode effectue une transformée de Fourier du signal temporel pour extraire la fréquence fondamentale qui émerge du spectre fréquentiel. Si le nombre d'échantillon du signal temporel est un multiple de 2, une transformée de Fourier rapide peut être effectuée ce qui permet un traitement accéléré de la fonction. Dans la troisième méthode, il convient d'analyser un échantillon temporel du signal afin de détecter les interférences et notamment l'espacement entre des interférences consécutives pour en déduire la fréquence Doppler. Bien entendu, on peut utiliser conjointement plusieurs de ces méthodes pour converger rapidement vers la fréquence Doppler du signal. Toutes ces méthodes peuvent s'effectuer en condition embarquée sur le dispositif où est installé le système de mesure en minimisant les ressources de calcul ou de mémoire.

Préférentiellement, l'étape de détermination de l'enveloppe du signal utile s'effectue sur la valeur absolue du signal utile.

Le demandeur a constaté que la détermination de l'enveloppe sur le signal utile lorsque celui-ci correspond à la valeur absolue du signal utile apporte un gain en robustesse au procédé de détermination du profil de la surface externe. En effet, le signal utile oscille autour de la valeur nulle, le fait de prendre la valeur absolue élimine les perturbations liées aux phasages des deux signaux utiles ce qui améliore la prédiction de la distance d de la surface externe du milieu.

Très préférentiellement, l'étape de détermination de l'enveloppe de chaque signal utile comprend une étape de nettoyage du bruit de speckle, c'est-à-dire le bruit de tavelure, sur l'enveloppe déterminée.

En effet, il est souvent préférable d'éliminer de l'enveloppe déterminée, les effets speckle, c'est-à-dire les effets produits par le bruit de tavelure, générés par l'effet Doppler et les signaux parasites de la rétro diffusion des ondes électromagnétiques. A cet effet, des filtres spécifiques sont à employer comme les filtres Lee Sigma ou gammaMAP qui sont très efficaces pour nettoyer la signature retenue. Ce nettoyage améliore la prédiction du profil de la surface externe du milieu en minimisant le bruit sur le signal utile. Le nettoyage sur l'enveloppe permet d'atténuer statiquement le bruit de mesure tout en déterminant les paramètres de ce nettoyage a priori, ce qui permet une exploitation en temps réel et embarquée du profil de la surface externe.

Préférentiellement, l'étape de nettoyage du bruit de speckle, c'est-à-dire du bruit de tavelure, sur l'enveloppe du signal utile comprend les étapes suivantes :

- Déterminer une taille de fenêtre temporelle et un taux de recouvrement entre des fenêtres contiguës associés à une méthode de filtrage sur le système de génération des signaux temporels A et B ;

- Découper l'enveloppe déterminée par un nombre entier N de fenêtres ;

- Déterminer une grandeur caractéristique à chaque fenêtre comme étant une moyenne des valeurs pondérées de l'enveloppe contenues dans ladite fenêtre ; et

- Définir l'enveloppe nettoyée de chaque signal comme étant la succession des grandeurs caractéristiques de chaque fenêtre.

Afin de permettre une exploitation en temps réel du procédé d'obtention du profil de la surface externe, il convient d'effectuer des opérations simples sur les signaux temporels issus de la mesure. Après avoir défini la méthode de filtrage employée qui est fonction à la fois de la nature de la surface externe du milieu à mesurer et du système de mesure employé, on découpe l'enveloppe en une multitude de fenêtres dont la taille est adaptée au bruit de speckle avec ou sans un recouvrement des fenêtres entre elles selon la méthode de filtrage employée. Pour chaque fenêtre qui correspond à l'utilisation d'un espace mémoire limitée, on calcule une moyenne des valeurs de l'enveloppe de la fenêtre. Ces valeurs sont potentiellement pondérées en cas de recouvrement entre les fenêtres contigües. Le signal reconstitué par les grandeurs caractéristiques de chaque fenêtre forme l'enveloppe nettoyée du bruit de speckle.

Très préférentiellement, la méthode de filtrage de l'étape de nettoyage du bruit de speckle, c'est-à-dire du bruit de tavelure, est comprise dans le groupe comprenant GammaMAP et Sigma.

Ce sont des méthodes de filtrage dont l'efficacité pour caractériser des rugosités de surface externe millimétrique est suffisante en employant les systèmes de mesure à l'aide de lumière, préférentiellement monochromatique.

Avantageusement, la détermination de la taille temporelle des fenêtres de filtrage et le taux de recouvrement entre des fenêtres contigües s'effectue lors d'une étape de la calibration du bruit de speckle, c'est-à-dire du bruit de tavelure, comprenant les étapes suivantes :

- Employer une cible blanche et rugueuse dont la rugosité de surface est supérieure à la longueur d'onde des ondes électromagnétiques ;

- Pour au moins une position connue de la cible par rapport au système de mesure

   o Déterminer l'enveloppe d'au moins un des signaux A et B ;

   o Transformer l'enveloppe dans le domaine fréquentiel pour obtenir une distribution ;

- Moyenner la au moins une distribution pour définir une distribution gaussienne de speckle, c'est-à-dire une distribution gaussienne de tavelure, liée au système de génération ;

- Définir au moins un bruit fréquentiel de speckles, c'est-à-dire un bruit fréquentiel de tavelure, comme le produit de la distribution gaussienne de speckle, c'est-à-dire la distribution gaussienne de tavelure, par un bruit aléatoire uniformément distribué entre 0 et 1 ;

- Appliquer le au moins un bruit de speckle, c'est-à-dire bruit de tavelure, à un profil théorique pour obtenir au moins un profil théorique bruité ; et

- Déterminer la taille de fenêtre temporelle et le taux de recouvrement en minimisant l'écart entre le profil théorique et le au moins un profil théorique bruité par analyse statistique.

En effet, l'amplitude de l'enveloppe est à la fois la combinaison de la réflectivité de la surface externe du milieu au point d'impact des ondes électromagnétiques incidentes, de la distance entre le point d'impact sur la surface externe et le point de focalisation ou géométrique des ondes électromagnétiques incidentes et d'un bruit de type speckle. Ce bruit de speckle, ou bruit de tavelure, est lié à la fois aux angles d'incidence du faisceau incident et de la distance entre la surface externe et les deux points géométriques d1 et d2. De ce fait, le bruit de speckle, ou bruit de tavelure, est directement lié à l'agencement du système de mesure. Le modèle mathématique du bruit de speckle, ou bruit de tavelure, peut être le produit d'une distribution fréquentielle gaussienne par un bruit uniformément réparti entre 0 et 1. Ce bruit uniformément réparti est statiquement aléatoire, il convient donc juste d'identifier la bonne distribution gaussienne des fréquences du bruit de speckle, ou bruit de tavelure, par calibration du système de mesure. Comme la distribution gaussienne est d'une certaine largeur fréquentielle, il convient de prendre une fenêtre temporelle suffisante pour ne pas amputer l'opération de nettoyage d'une erreur liée à la transformation temporelle/fréquentielle des signaux. Cela revient à moyenner le signal temporel de l'enveloppe déterminée sur une temps suffisamment long pour être représentatif statiquement du bruit de speckle, ou bruit de tavelure, liée au système de génération. La première phase est de quantifier le bruit de speckle, ou bruit de tavelure, sur les réponses des signaux du système de mesure. Pour cela, l'analyse d'un seul parcours des ondes électromagnétiques peut être faite sur une seule position de la cible. Cependant, il est préférable de multiplier les positions de la cible et d'analyser les divers signaux du système de mesure. Après avoir obtenu une multitude d'enveloppes, on détermine une distribution gaussienne de ces enveloppes par une technique de moyennage des diverses distributions obtenues. La seconde étape consiste à créer une multitude de profils bruités à partir d'un profil théorique en générant une multitude de bruit de speckle, ou bruit de tavelure, associé au système de génération. Enfin, on détermine la taille de fenêtrage temporelle optimale et le taux de recouvrement entre les fenêtres contigües à l'aide d'une analyse statistiques sur l'ensemble des profils bruités en comparaison avec un profil théorique connu en choisissant les paramètres qui minimisent les écarts sur l'ensemble de la population des profils bruités.

Avantageusement, l'étape de combinaison des enveloppes nettoyées comprend la différence des enveloppes nettoyées exprimées en échelle logarithmique.

Le demandeur a constaté que cette mise en forme de la combinaison mathématique des enveloppes nettoyées permettait d'améliorer la sensibilité de la fonction F, ce qui améliore la précision sur l'évaluation de la distance d de la surface externe du milieu. Du fait de la propagation gaussienne des ondes électromagnétiques et de ce fait de la puissance rétrodiffusée, l'échelle logarithmique permet de linéariser la puissance rétrodiffusée en fonction de la distance par rapport au point de focalisation ou géométrique des ondes électromagnétiques. La fonction F est linéaire de façon plus indépendante de la position des points géométriques et de la focalisation des ondes électromagnétiques.

**Description brève des dessins**

L'invention sera mieux comprise à la lecture de la description qui va suivre dans le cas d'une application de type dispositif fixe et milieu observé en mouvement. Cette application est donnée uniquement à titre d'exemple et faite en se référant aux figures annexées dans lesquelles :

- La Fig 1 est un premier exemple d'un premier mode de réalisation d'un système de mesure.

- La Fig. 2 est un deuxième exemple préféré du premier mode de réalisation selon l'invention.

- La Fig. 3 est un exemple d'un second mode de réalisation du système de génération selon l'invention.

- La Fig. 4 est un synoptique de la méthode d'évaluation du profil de la surface externe d'un milieu à l'aide de signaux issus du système de mesure.

- Les Fig. 5a à 5f illustrent les diverses étapes et la qualité de la méthode d'évaluation du profil d'une surface externe en dynamique et en temps réel.

**Description détaillée de modes de réalisation**

Pour la mise en oeuvre de l'invention, il convient tout d'abord de définir un système optique permettant de générer deux faisceaux de lumière dont le point de focalisation est situé de part et d'autre de la surface externe que l'on souhaite observer.

La Fig. 1 présente un premier système de mesure 1 de signal représentatif du profil de la surface externe 22 du milieu 21 employant, comme onde électromagnétique, des ondes lumineuses. La surface externe 22 définit un plan médian 23 pour lesquels, les points de la surface sont statiquement équitablement répartis de part et d'autre du plan médian 23. Ce plan médian 23 définit une direction normale qui se caractérise sur la figure par une ligne droite alternée de pointillés et de traits située verticalement selon la direction W. La figure montre une vue en coupe de la surface externe 22 dans un plan défini par la direction U de mouvement du milieu 21 par rapport au dispositif statique sur lequel est installé le système de mesure 1. Les chemins optiques 11' et 12' dessinent sur la surface externe 22 une ligne de lecture suivant la direction U.

On entend par le terme « parcours optique », la succession des positions spatiales contiguës suivies par le faisceau de lumière entre une source de lumière 2 ou un moyen de génération d'un faisceau de lumière et la surface externe 22 du 21 observé.

On entend par le terme « chemin optique » au moins une partie d'un parcours optique entre la dernière lentille de focalisation 5 ou 6 du faisceau de lumière avant la surface externe 22 et le point le plus éloigné entre la surface externe 22 et le point de focalisation d1 ou d2 du faisceau de lumière.

Dans cette Fig. 1, le système de génération 1 correspond à un premier mode de réalisation dans lequel une seule source de lumière est employée. Une source laser 2 émet un premier faisceau gaussien de lumière cohérente monochromatique à une longueur d'onde λ suivant un premier parcours optique 11 déterminé par le trait continu issu de la source 2. Ce premier faisceau de lumière traverse en sens aller un capteur de lumière 3 avant de rencontrer une première lentille de focalisation 5 dont la distance focale est f1. A la sortie de la première lentille de focalisation 5, la lumière est focalisée à une distance de focalisation f1 suivant n'importe quel chemin optique.

Le premier chemin optique 11' issus du premier faisceau de lumière ayant traversé la première lentille de focalisation 5 est ensuite divisé en 2 au travers d'un cube séparateur 4 par exemple 50/50. Ainsi, la puissance lumineuse est séparée en deux parties égales et chaque demie puissance est dirigée suivant deux directions différentes. Le cube séparateur 4 est le moyen de génération d'un second faisceau de lumière issu du premier faisceau de lumière suivant un second parcours optique 12 qui est identique au second chemin optique 12'. Par conséquent elle garde ses caractéristiques du premier faisceau de lumière. Ainsi le second faisceau de lumière est gaussien, cohérent et monochromatique à la même longueur d'onde que le premier faisceau de lumière. De plus, il est généré depuis un faisceau de lumière focalisé, ainsi le second chemin optique 12' est créé. Le miroir 7 joue ici le rôle de moyen de cheminement suivant le second chemin optique 12'. Il a pour premier rôle de diriger le second faisceau de lumière vers la surface externe 22 suivant un angle d'incidence dont la projection angulaire par rapport à la normale au plan médian 23 dans le plan défini par la normale au plan médian 23 et la direction U vaut θ2 qui est préférentiellement inférieure à 45 degrés tout en étant obligatoirement non nulle. Le second rôle du miroir 7 est de définir la position du point géométrique d2 de sorte que ce point soit différent du point géométrique d1 où se focalise le premier chemin optique 11'. De ce fait, le point géométrique d2 correspondant à la distance de focalisation f2 du second faisceau de lumière se trouve au-dessus du plan médian 23 de la surface externe 22 du milieu 21. Ce second faisceau de lumière vient impacter la surface externe 22 au point d'impact 14 sous un angle d'incidence dont la projection, dans le plan, vaut $\theta_2$.

L'autre demi-puissance restante suit le premier chemin optique 11' et vient impacter la surface externe 22 au point d'impact 13 sous un angle d'incidence dont la projection par rapport à la normale au plan médian 23 dans le plan défini auparavant vaut θ1 qui est supérieur à 1 degré. Pour cette partie du premier faisceau de lumière, la distance de focalisation f1 et le premier chemin optique 11' définit un premier point géométrique d1 situé en dessous du plan médian 23 de la surface externe 22. Ici, les deux points d'impact 13 et 14 correspondants respectivement à la rencontre du premier chemin optique 11' et respectivement du second chemin optique 12', avec la surface externe 22 sont écartés d'une distance X suivant la direction U. Bien entendu, les deux points de focalisation auraient pu se situer au-dessus de la surface externe. Mais, cette configuration améliore la sensibilité de la méthode d'obtention du profil en profitant du fait que le point de focalisation puisse être virtuel. En effet, on écarte ceux-ci ce qui renforce la précision de mesure du profil.

Une partie des premier et second faisceaux de lumière incidents sont rétrodiffusées par la surface externe 22 au niveau de chacun des points d'impact 13 et 14. Une partie de cette lumière rétrodiffusée suit le cheminement inverse du parcours optique incident. En particulier, les deux faisceaux de lumière se réunissent après le cube séparateur 4 pour poursuivre conjointement leur route vers la source de lumière 2 et passant obligatoirement par le capteur de lumière 3. La rencontre du premier faisceau incident et du faisceau rétrodiffusé engendre des interférences électromagnétiques tant que ces deux faisceaux sont cohérents entre eux.

Ce système de mesure 1 selon le premier mode de réalisation, employant une seule source de lumière 2, mais aussi équipé d'un seul capteur de lumière 3 ne délivre qu'un seul signal électrique en sortie du capteur de lumière 3 qu'il dirige vers le dispositif électronique comprenant l'amplificateur de signaux 9. Le capteur de lumière 3 doit être capable de traduire les interférences électromagnétiques qui ont lieu au niveau de ce capteur de lumière 3 en un signal électrique. Peu importe la localisation du capteur de lumière 3 sur le premier parcours optique mais il est préférable de le positionner où la somme des deux faisceaux de lumière génère une taille de faisceau le plus petit pour optimiser les interférences.

Afin de dissocier sur l'unique signal électrique du capteur de lumière 3 les informations issues de l'interférence du premier et du second faisceaux de lumière, il est préférable que l'information soit facilement détectable. Or, l'information utile est ici portée en particulier par le fondamental de la fréquence Doppler et ses harmoniques. La fréquence Doppler est dictée en théorie par trois paramètres. Le premier correspond à la vitesse V relative selon la direction U entre le milieu 21 et le dispositif sur lequel le système de génération 1 est monté. Le second est l'angle d'incidence $\theta$ entre le faisceau de lumière et la normale à la surface externe 22 que l'on prendra comme étant celle du plan médian 23. Le troisième est la longueur d'onde $\lambda$ de la lumière cohérente. Ici, seul l'angle d'incidence $\theta$ du faisceau de lumière peut générer un paramètre efficace pour dissocier les deux fréquences Doppler. En effet, les deux autres paramètres sont potentiellement identiques par construction de ce système de mesure 1. De ce fait, les premier et second angles d'incidence par rapport à la normale au plan médian 23, ici on parle de leur projection dans le plan défini plus haut, sont différents, ce qui permet de dissocier les fréquences Doppler l'une de l'autre.

Enfin, afin que les signaux issus de chaque faisceau de lumière puissent être exploités pour déterminer la distance d de la surface externe 22, et de ce fait permettre la reconstruction du profil de la surface externe 22 selon la ligne de lecture, il convient d'écarter les deux points géométriques d1 et d2 d'une longueur supérieure à la plus grande longueur de Rayleigh des deux faisceaux gaussiens de lumière. En effet, la propagation gaussienne de la lumière assure que la quantité de lumière rétrodiffusée est proportionnelle à la distance entre le point de focalisation du faisceau de lumière et la surface externe 22 où la rétrodiffusion a lieu. En fait, l'énergie sera maximale si, la surface externe 22 se situe au point de focalisation. Plus on s'en éloigne, plus l'énergie lumineuse rétrodiffusée diminue suivant une courbe gaussienne ce qui apporte une dynamique mesurable sur les interférences électromagnétiques. En assurant un éloignement suffisant entre les deux points de focalisation, on assure qu'une combinaison des interférences électromagnétiques mesurées sur chaque voie permet de déduire la distance d de la surface externe 22.

On peut observer les interférences électromagnétiques au travers du phénomène de self mixing, ou phénomène de rétro injection optique, en employant une source laser comme source de lumière 2, équipée par exemple d'une photodiode comme capteur de lumière 3 L'enregistrement temporel du signal de sortie de la photodiode est alors une image des interférences de la lumière entre le faisceau incident et le faisceau rétrodiffusé par la surface externe. Les variations temporelles sont dues à la fois à la distance entre le point de focalisation d et la surface externe 22, la réflectivité de la surface externe 22. L'information est en partie portée par la fréquence Doppler liée à la vitesse relative V entre le milieu 21 et le système de mesure 1. En assurant deux voies de mesure correspondantes chacune à un faisceau de lumière pointant sur la même ligne de lecture de la surface externe 22 dont le point de focalisation est différent, les deux voies de mesures sont chacune le résultat de la réflectivité de la surface externe 22 et de la distance entre le point de focalisation et la surface externe 22. La combinaison des deux voies permet de rendre insensible le résultat des deux voies à la réflectivité de la surface externe 22 et de n'être dépendant que de la distance des deux points de focalisations ou géométriques par rapport à la surface externe 22.

La Fig. 2 est une illustration d'un autre exemple d'un système de mesure 1 selon le premier mode de réalisation, c'est l'exemple préféré de ce mode de réalisation. Cette fois-ci, le premier faisceau de lumière issu de la première source de lumière 2 est focalisé à l'aide d'une lentille de localisation 5 située en aval du premier dispositif optique 4. Une nouvelle fois, ce dispositif optique 4 joue aussi le rôle d'un moyen de génération d'un second faisceau de lumière gaussien, cohérent et monochromatique. Ce second faisceau de lumière est dû à la séparation de la puissance lumineuse du premier faisceau gaussien au travers du cube séparateur 4. Celui délivre une première partie du premier faisceau de lumière vers la surface externe 22 du milieu 21 sous une incidence de sorte que la projection $\theta1$ de l'angle d'incidence par rapport à la normale suivant le plan médian 23 de la surface externe 22 soit supérieure à un degré. Préalablement au point d'impact 13 sur la surface externe 22, le faisceau de lumière est focalisé par la lentille de focalisation 5 à une distance focale f1 de sorte que le point géométrique d1 qui est le point de focalisation f1 suivant le premier chemin optique 11 soit un point virtuel situé dans le milieu 21 Ainsi, sous cette incidence, une partie du faisceau de lumière subit l'effet Doppler, le faisceau rétrodiffusé porte alors une information de type Doppler qui sera exploitée pour déterminer la distance d de la surface externe.

De même le second faisceau de lumière qui est l'autre partie du premier faisceau de lumière suit un second parcours optique vers la surface externe 22 du milieu 21. Ici, le moyen de cheminement de ce second faisceau de lumière comprend un miroir 7 qui redirige le second faisceau de lumière vers la surface externe 22. Sur le second parcours optique se trouve une seconde lentille de focalisation 6 dont la focale f2 focalise le second faisceau de lumière au point géométrique d2 situé au-dessus du plan médian 23. Le point d'impact 14 du second faisceau de lumière suivant le second chemin optique est identique au premier point d'impact 13 d'une partie du premier faisceau de lumière. Seule la projection $\theta2$ de l'angle d'incidence du second faisceau de lumière sur le surface externe 22 par rapport à la normale au plan médian 23 diffère de la projection $\theta1$.

Dans cette Fig. 2, le système de mesure 1 comprend un unique et seul capteur de lumière 3 situé sur le premier parcours optique du premier faisceau de lumière. Celui-ci est connecté à un amplificateur de signaux 9 pour rendre exploitable le signal électrique délivré par le capteur 3. Le capteur 3 enregistre les interférences électromagnétiques du premier et second faisceau de lumière. Ceux-ci portent l'information sur les fréquences Doppler de chaque faisceau de lumière. Ces fréquences sont dépendantes de la longueur d'onde de la lumière monochromatique, de la vitesse de déplacement V et de l'angle d'incidence suivant la direction U. En raison des écarts sur l'angle d'incidence, les informations portés par chacun des faisceaux de lumière sont facilement dissociables. En effet, le rapport des angles de projections est d'environ 1,5. De plus, les angles d'incidence sont tous les deux contenus dans un cône dont l'axe de révolution est porté par la normale au plan médian 23, dont l'angle d'ouverture est inférieur à 30 degrés et dont le sommet se situe sur le plan médian 23 de la surface externe 22.

Afin que le faisceau rétrodiffusé issu du second chemin optique perturbe à minima les interférences électromagnétiques entre le premier faisceau de lumière et son faisceau rétrodiffusé au niveau du premier capteur de lumière 3, il est préférable que les deux faisceaux de lumière en aval de leur lentille de focalisation, c'est-à-dire au niveau de leur chemin optique ne se croisent pas avant la surface externe. C'est une précaution à prendre pour tout système de mesure 1 du premier mode de réalisation qui ont une seule source de lumière 2.

Ici, les deux points d'impact 13 et 14 des premier 11 et second 12 chemins optiques sont confondus. Ceci évite toute correction temporelle entre les deux signaux couplés au niveau du capteur de lumière 3. Ainsi, les deux signaux seront directement exploitables pour en déduire la distance d de la surface externe 22 du milieu 21, ce qui permet un traitement en temps réel plus rapide. De plus, l'utilisation d'un seul capteur ne nécessite pas une synchronisation des signaux limitant aussi les petites erreurs, ce qui réduit le bruit sur les signaux.

C'est le montage préférentiel du premier mode de réalisation en raison de l'absence de ces corrections temporelles sur les signaux qui accélère le traitement des signaux et limite le bruit sur les signaux. De plus, c'est un montage peu coûteux puisque l'on utilise une seule source de lumière et un seul capteur.

La Fig. 3 présente un premier exemple d'un système de mesure 1 selon le second mode de réalisation, c'est-à-dire comprenant deux sources de lumière 2 et 2'. Cette fois-ci, le premier faisceau de lumière issu de la première source de lumière 2 est focalisé à l'aide d'une lentille de localisation 5 située en amont d'un premier dispositif optique 4' suivant le cheminement incident de la lumière. Mais, le second faisceau de lumière est lui généré par une seconde source de lumière 2' délivrant aussi un faisceau de lumière gaussien, cohérent et monochromatique. Ce second faisceau de lumière est focalisé à l'aide d'une seconde lentille de focalisation 6 située en amont du premier dispositif optique 4'.

Cette fois-ci, ce dispositif optique 4' redirige le premier faisceau de lumière focalisé vers la surface externe 22 du milieu 21 suivant un premier chemin optique 11. Ce dispositif optique 4' joue d'autre part le rôle d'un moyen de cheminement du second faisceau de lumière focalisé en redirigeant celui-ci vers la surface externe 22 du milieu 21 sur un second chemin optique 12. Mais, ce dispositif optique 4' permet essentiellement de fusionner les deux faisceaux de lumière en un seul, ce qui garantit que les deux chemins optiques 11 et 12 sont identiques après le passage des faisceaux incidents au travers du dispositif optique 4', qui est un cube optique fusionnant des faisceaux initialement non parallèles. Ainsi les premier et second faisceaux de lumière convergent vers la surface externe 22 du milieu 21 sous une incidence de sorte que la projection θ de l'angle d'incidence par rapport à la normale suivant le plan médian 23 de la surface externe 22 soit supérieure à un degré. Ainsi, sous cette incidence, le faisceau rétrodiffusé est soumis à l'effet Doppler provoqué par la vitesse de déplacement V entre le dispositif comprenant le système de mesure 1 et le milieu 21 suivant la direction U. Cependant, comme on désire que les points géométriques d1 et d2 pour chacun des faisceaux de lumière se situent de part et d'autre du plan médian, il suffit pour cela de déplacer relativement les deux lentilles de focalisation 5 et 6 sur leur chemin optique respectif 11 et 12 pour que la distance focale f1 et f2 de chacune des lentilles définissent des points géométriques d1 et d2 différents. Il est aussi possible d'employer des lentilles de focalisation 5 et 6 dont les distances de focalisation f1 et f2 diffèrent de sorte à définir les points géométriques différents.

Ici, le système de mesure 1 comprend deux capteurs de lumière 3 et 3' associés respectivement au premier et second parcours optiques. Chaque capteur de lumière 3 et 3' enregistre les interférences électromagnétiques entre le faisceau de lumière incident et son faisceau rétrodiffusé par la surface externe 22 du milieu 21.

Les sources de lumière 2 et 2' étant physiquement dissociées, les faisceaux de lumière issus de l'une ne peuvent être cohérents avec les faisceaux de lumière issus de l'autre ce qui limite les interférences entre les premiers et seconds faisceaux de lumière. Ainsi, les interférences électromagnétiques mesurées sont liées à une unique source de lumière quelle que soit la longueur d'onde de la source de lumière 2 et 2'.

Les deux signaux électriques issus de chaque capteur de lumière 3 et 3' sont synchronisés au niveau du dispositif électronique comprenant un amplificateur de signaux. Les signaux ne nécessitent aucune correction temporelle puisque qu'ils ont le même point d'impact 13 et 14 sur la surface externe 22.

Ici, ce second mode de réalisation est économiquement intéressant si les sources de lumière sont des diodes lasers classiques ayant au niveau de leur cavité amplificatrice une photodiode intégrée qui sert de capteur de lumière 3 ou 3'. Le packaging est alors concentré et bon marché permettant une exploitation économique du système de mesure 1. En effet, lorsqu'une seule source de lumière est employée comme dans le cas du premier mode de réalisation, l'emploi d'une source laser autre qu'une diode est envisageable. On peut aussi se servir de la cavité amplificatrice du laser comme zone spatiale privilégiée d'observation des interférences électromagnétiques. L'emploi d'un capteur de lumière sous la forme d'une photodiode ou phototransistor en lien avec la cavité amplificatrice peut être envisagé ou l'observation des paramètres d'alimentation de la source laser à l'aide d'un ampèremètre ou d'un voltmètre si la source laser n'est pas équipée d'une régulation électronique de son alimentation.

Bien entendu, ces exemples des deux modes de réalisations sont des applications concrètes de système de mesure de signaux temporels A et B. Pour autant, ces systèmes de mesure 1 ne seraient se limiter à ces exemples. En particulier toute combinaison des caractéristiques de ces exemples est envisageable et entre dans le cadre général d'un système de mesure 1 délivrant deux signaux temporels qui est le résultat des interférences électromagnétiques qui sont fonction de la distance d entre le point de focalisation et la surface externe du milieu et de la réflectivité de la surface externes aux ondes lumineuses dans ces exemples. Pour autant, on peut imaginer un même système de mesure 1 avec de ondes magnétiques ou électriques.

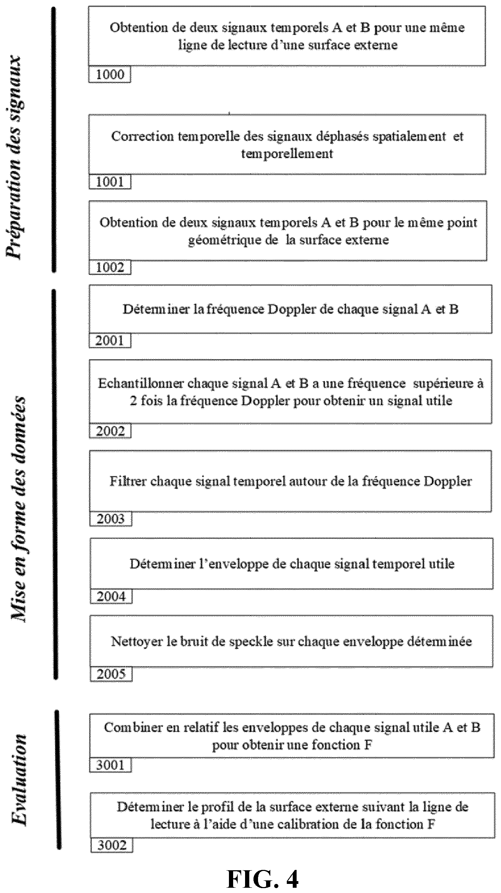

La Fig. 4 est un synoptique du procédé d'évaluation de la distance d de la surface externe par rapport à une référence mettant potentiellement en oeuvre l'un des systèmes de mesure 1 décrit auparavant animé d'une vitesse relative V par rapport au milieu 21 suivant une direction U. Mais, ce procédé ne saurait pour autant se limiter à des signaux sortis de ce système de génération.

La Fig. 4 comprend trois phases principales. La première concerne la préparation des signaux électriques, par exemple en sortie du système de mesure. La seconde phase concerne la mise en oeuvre de ces signaux afin d'effectuer la troisième phase qui est l'évaluation à proprement dite de la distance d de la surface externe. Bien entendu cette première phase est optionnelle si un système de mesure génère directement deux signaux par rapport à des références connues pour le même point géométrique de ligne de lecture de la surface externe. Ce système est par exemple, le second mode de réalisation du système de mesure de la Fig. 3 ou l'exemple préféré du premier mode de réalisation de la Fig. 2.

La première phase comprend une première étape 1000 consistant à l'obtention de deux signaux temporels A et B représentatif du profil de la surface externe par rapport à une ligne de lecture. Ceux-ci peuvent par exemple être la sortie du dispositif électronique du système de mesure. Bien entendu, à cette étape il n'est pas certain que les deux signaux soient phasés temporellement et spatialement ce qui nécessite de passer par l'étape suivante 1001. Par exemple, ces deux points sont séparés suivant la ligne de lecture de la surface externe d'un espacement X comme dans l'exemple de la Fig. 1.

La seconde étape 1001 correspond la correction spatio-temporelle à appliquer à l'un et/ou l'autre des signaux temporelles A et B de l'étape 1000. Pour cela, il convient de connaître le procédé d'obtention des deux signaux temporels, c'est-dire l'espacement spatio-temporel entre les deux points de mesure correspondant chacun à un signal temporel par rapport à une référence commune. La position spatiale peut être une position métrique obtenu visuellement par exemple. Le décalage temporel peut être la date de passage devant un point repère servant par exemple de référence commune au travers d'un signal d'horloge avec une métrique pour chaque signal. De plus, il est utile de connaître la vitesse de défilement suivant la ligne de lecture de la surface externe associée à chaque signal temporel. L'ensemble de ces données permet de définir une matrice de corrections pour recaler spatio-temporellement les deux signaux sur un même point géométrique de la ligne de lecture. L'application de cette correction aux signaux temporels de l'étape 1000 donne le résultat de l'étape 1002 qui clôt la phase de préparation des signaux.

La seconde phase correspond à une mise en forme des données de mesure, représentées par les signaux temporels obtenus à l'étape 1002 de la première phase. Le principe du procédé suivant l'invention est que l'information utile des signaux temporels est contenue par le fondamental et les harmoniques de la fréquence Doppler associée à la vitesse relative V du milieu 21 par rapport au système de mesure des signaux temporels. Ceci est indépendant du moyen physique de mesure des signaux, que cela soit la lumière, le son ou tout autre onde électromagnétique.

La première étape 2001 consiste à définir la fréquence Doppler associée à la vitesse relative V. La détermination de la fréquence Doppler peut être faite au travers d'une formule mathématique comme la formule liant la vitesse relative V, l'angle d'incidence par rapport à la normale à la surface externe et la longueur d'onde de la lumière. Elle peut aussi résulter d'une analyse des signaux, que cette analyse soit temporelle ou fréquentielle. Connaissant cette fréquence Doppler, il est nécessaire que la fréquence d'échantillonnage des signaux temporels soit au moins deux fois supérieure à la fréquence Doppler, respect de la condition du Théorème de Shannon, afin de s'assurer que l'information des signaux temporels est vraisemblable et non induite d'incertitude liée aux conditions de mesure, ce qui correspond à l'étape 2002. Optionnellement, il peut s'avérer utile de filtrer les signaux temporels autour de la fréquence Doppler identifiée selon l'étape 2001 et ceci peut être fait par exemple sur une bande large comprise entre 0,7 et 1,3 fois la fréquence Doppler. Ainsi, selon le mode d'identification de la fréquence Doppler, théoriquement ou par analyse fréquentielle des signaux ou par analyse temporelle des signaux, ainsi que l'évolution lente potentielle de la vitesse relative V, la fréquence Doppler n'est pas forcément déterminée de manière absolue, une fenêtre large permet alors de couvrir toutes ces incertitudes en isolant l'information exploitable, ce qui correspond à l'étape 2003. Bien entendu, si les perturbations fréquentielles liées au système de mesure des signaux sont faibles, il est tout à fait envisageable de prendre le signal complet sans filtrage sélectif et passer directement à l'étape 2004.

L'étape 2004 consiste à se focaliser sur le signal général portant l'information au travers de l'enveloppe du signal utile. On s'attend à que celui-ci soit une image des évènements liés à la fréquence Doppler associée à la vitesse relative V. On détermine à l'étape 2004, l'enveloppe du signal temporel utile pilotée potentiellement par une bande étroite de fréquence autour de la fréquence Doppler. Bien entendu l'enveloppe du signal utile peut être construite à partir des minimas, des maximas ou de la valeur absolue du signal utile. Le choix de la méthode dépend de la nature des signaux de mesure par rapport à la grandeur physique observée.

Optionnellement, afin de statiquement éliminer les bruits parasites sur l'enveloppe du signal temporel de mesure, on effectue un nettoyage de type speckles, c'est-à-dire de type tavelure, pour en extraire l'information précise au cours de l'étape 2005. Ceux-ci permettent d'éliminer statistiquement les aléas de mesure dus au non-respect de conditions d'une mesure idéale. Cela se fait au travers d'une campagne d'apprentissage sur une cible connue représentative de la surface externe du milieu que l'on désire observer à l'aide du système de mesure envisagé. Cette phase d'apprentissage détermine une distribution gaussienne des aléas de mesure qu'il convient de coupler à un bruit équitablement réparti pour déterminer un bruit de speckle, ou bruit de tavelure. Cela permet de déterminer le fenêtrage temporel du signal utile qu'il faut prendre en compte pour nettoyer le bruit de speckle, ou bruit de tavelure, en application de la distribution gaussienne identifiée. L'étape 2005 consiste à retirer du signal d'enveloppes le bruit de speckle, ou bruit de tavelure, déterminé pour obtenir une enveloppe nettoyée sur chaque voie de mesure. Cette étape clôt la seconde phase de mise en forme des données.

La dernière phase est l'évaluation de la variation de la distance d de la surface externe par rapport à une référence permettant de déduire le profil de la surface externe. Celle-ci comprend une première étape 3001 qui consiste à combiner mathématiquement les enveloppes obtenues aux étapes 2004 ou 2005 de façon à définir une fonction F qui soit bijective. La bijectivité de la fonction F permet de garantir l'unicité de la distance d de la surface externe à l'aide des informations des deux enveloppes. Dans le cas de self mixing, ou rétroinjection optique, avec des faisceaux de lumière gaussiens et cohérents, une définition de la fonction F comme étant la différence des enveloppes exprimées en échelle logarithmique assure à la fois la monotonie et une bonne sensibilité de la fonction F sur la gamme de distance séparant les deux points géométriques d1 et d2 du système de mesure. La précision est renforcée en prenant la valeur absolue du signal utile pour construire les enveloppes. Bien entendu, la précision s'améliore en prenant les enveloppes nettoyées.

Enfin pour remonter à une distance d en relatif entre divers points de la ligne de lecture de la surface externe par rapport à une position géométrique de référence, il faut établir une calibration entre le résultat de la fonction F telle que définie à l'étape 3001 et une cible dont la position est connue par rapport aux points géométriques du système de mesure, ce qui correspond à l'étape 3002. Cela permet de convertir la réponse de la fonction F en une grandeur métrique connue.

A cet effet, une étape de calibration doit être entreprise à partir du dispositif de mesure délivrant directement ou indirectement les signaux temporels A et B par rapport à deux points géométriques d1 et d2 différents. Dans le cas du système de mesure présenté, les deux points géométriques sont les points d1 et d2 où sont focalisés chacun des faisceaux de lumière et situés de part et d'autre du plan médian de la surface externe du milieu. Il est tout à fait possible de positionner ces deux points géométriques au-dessus de la surface externe pour extrapoler la distance jusqu'à la surface externe, en supposant une évolution connue de la fonction bijective F Ici, la calibration s'effectue à l'aide d'une cible dont la réponse physique est au moins aussi forte de la surface externe du milieu que l'on souhaite observer. Dans le cas du système de mesure en général, il faut employer une cible blanche, c'est-à-dire de très forte réflectivité par rapport au milieu d'observation. Ainsi, pour notre illustration avec une grandeur physique qui est une lumière monochromatique, la majorité de la lumière incidente est rétrodiffusée par la surface qui en absorbe une très faible proportion. De plus, afin d'observer une diffusion de la lumière, il faut que la cible soit rugueuse. Cependant, afin de ne pas être pénalisé par une forte intégration entre la lumière du système de génération et la cible, il convient que la rugosité de surface de la cible soit supérieure à celle du milieu observé. Ensuite, il suffit d'effectuer une calibration du système de mesure en déplaçant la cible entre les points géométriques d1 et d2 de manière connue et d'identifier à l'aide des enveloppes la valeur de la fonction F correspondante. Cette calibration sera employée à l'étape 3002 pour obtenir la distance d de la surface externe du système. Ici, la fonction F est insensible à la puissance rétrodiffusée puisque la fonction F est une combinaison relative des enveloppes des signaux, comme le rapport en échelle linéaire ou la différence en échelle logarithmique. Dans le cas où la combinaison des enveloppes est en absolu, il conviendra de faire une calibration plus précise à l'aide d'une cible dont les propriétés physiques sont semblables à celles du milieu que l'on souhaite observer à l'aide du dispositif de mesure selon la métrique employée : la lumière ou les ondes électromagnétiques.

La correction optionnelle du bruit de speckle, ou bruit de tavelure, s'effectue aussi en employant la même cible que l'étape de calibration des signaux. Cette fois-ci, on multiplie les mesures temporelles en déplaçant la cible connaissant le résultat à atteindre pour évaluer la distribution des mesures autour de la valeur de référence. Pour cela, on évalue dans le domaine fréquentiel, la distribution des mesures selon des conditions de mesures diversifiées sur un large échantillon de temps. On modélise cette distribution fréquentielle par une gaussienne centrée. La largeur de cette gaussienne conditionne la taille minimale de la fenêtre temporelle de mesure pour que statistiquement la distribution gaussienne soit représentative. On évalue alors le bruit de speckle, ou bruit de tavelure, par le produit de la distribution fréquentielle gaussienne par un bruit uniformément réparti entre 0 et 1. Ce bruit de speckle, ou bruit de tavelure, est à retrancher de l'enveloppe déterminée pour obtenir une mesure qui ne dépend à l'ordre un que de la réflectivité de la cible ou de la surface externe du milieu observé. On suppose une proportionnalité entre la réflectivité de la cible et celle de la surface externe du milieu à observer qui sera transparent par la combinaison relative des enveloppes.

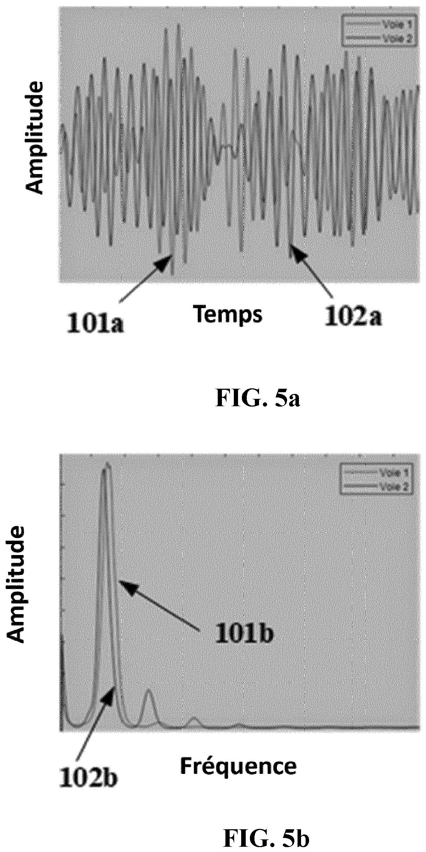

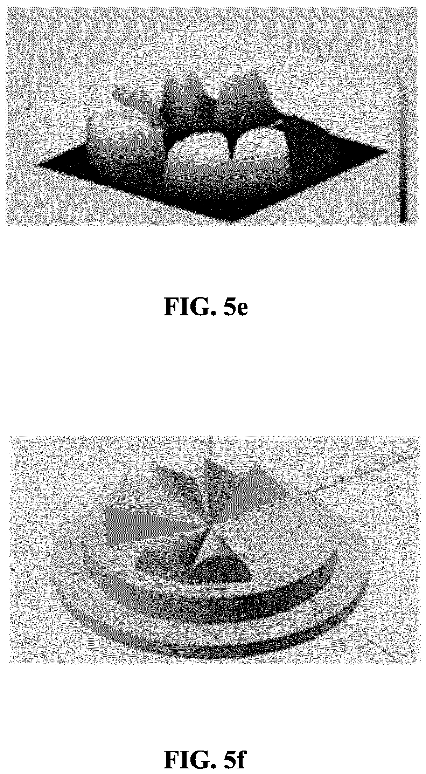

Les Fig. 5a à 5e illustrent la méthode de mesure du profil d'une surface externe d'une éprouvette dont la figure 5f représente la reconstruction tridimensionnelle obtenue par des moyens photographiques à l'aide d'un éclairage spécifique. Cette éprouvette circulaire présente un profil, selon la direction de son axe, évolutif en fonction de l'azimut de façon non monotone. Et, une évolution proportionnelle de ce profil est définie selon le rayon depuis le centre de l'éprouvette circulaire. Celle-ci est montée sur un arbre de rotation tournant à une vitesse angulaire de l'ordre de 1550 tr/mn. Enfin, l'arbre de rotation est animé d'un mouvement de translation suivant une direction X permettant de déplacer en translation le centre de l'éprouvette circulaire. La rugosité de surface de l'éprouvette est de l'ordre millimétrique en ce qui concerne les massifs recouvrant 75 pourcents de l'éprouvette. Sur le dernier quart de l'éprouvette, s'apparentant à une surface lisse dont la rugosité de surface de l'ordre de la dizaine de micromètres.

Pour appliquer la méthode, un système de mesure préféré selon le second mode de réalisation a été employé dont le principe est illustré en Fig. 3. Il s'agit d'un système de mesure comprenant deux sources de lumière distinctes dont la puissance lumineuse est fusionnée en un unique chemin optique à destination de la surface externe de l'éprouvette. L'angle d'incidence des premier et second faisceaux de lumière sur la surface externe de l'éprouvette est identique tout en étant contenu dans un cône d'angle d'ouverture inférieur à 30 degrés de sorte que la projection de ces angles d'incidence par rapport à la normale au plan médian de la surface externe dans un plan défini par cette normale et la direction U de déplacement de l'éprouvette soit d'environ 5 degrés. De plus, on assure que les deux faisceaux de lumière aient le même point d'impact sur la surface externe ce qui limite les corrections à effectuer sur les signaux interférométriques des deux chemins optiques. En fait, la ligne de lecture sur la surface externe de l'éprouvette est une succession de cercles centrés sur le centre du disque circulaire de l'éprouvette, chaque cercle correspondant à une position de translation différente de l'arbre de rotation sur lequel est montée l'éprouvette.

Le système de mesure comprend, en tant que source de lumière, une diode laser équipée d'une photodiode à l'entrée de la cavité amplificatrice de la diode laser. La diode laser émet un faisceau de lumière cohérent, monochromatique à la longueur d'onde unique et dont la propagation suivant la direction du faisceau est de type gaussien. Ici la longueur d'onde de la première diode laser est centrée sur 1350 nanomètres. Tandis que la seconde est centrée sur 1500 nanomètres. La photodiode associée à chaque diode laser enregistre les interférences électromagnétiques entre le faisceau de lumière incident et le faisceau de lumière rétrodiffusé par la surface externe de l'éprouvette. Les interférences électromagnétiques du premier chemin optique sont majoritairement portées par les harmoniques de la première fréquence Doppler liée directement la première longueur d'onde, inversement proportionnelle à la longueur d'onde. De l'autre côté, les interférences électromagnétiques du second chemin optique sont portées par les harmoniques de la seconde fréquence Doppler dont la fréquence Doppler est inférieure à la première fréquence Doppler. La différenciation des points géométriques d1 et d2 où sont collimatés les premier et second chemins optiques, est déterminés par la longueur des chemins optiques. Ici, le premier chemin optique vers la surface externe est défini par la première lentille de focalisation au travers de sa position sur le premier parcours optique et sa distance focale. Le second parcours optique comprend un miroir, intégré à l'élément optique fusionneur pour rediriger le second faisceau de lumière vers la surface externe de l'éprouvette. Le point géométrique d2 est directement piloté par le positionnement et la distance focale de la seconde lentille de focalisation du système de génération. Ainsi, on obtient en sortie du dispositif électronique deux signaux électriques associés chacun à une photodiode contenant l'information utile portée par les harmoniques de chaque fréquence Doppler différente. A noter que si on emploie des diodes laser identiques au niveau des première et second sources de lumière, on obtiendrait toujours les mêmes signaux de sortie du système de génération en raison de la cohérence du faisceau de lumière de chaque diode qui limitent les interférences entre les faisceaux de lumière.

La mesure s'effectue en fixant le système de mesure sur un dispositif statique situé au droit de l'éprouvette de telle sorte que les points géométriques d1 et d2 soient situées de part et d'autre de la surface externe de l'éprouvette. Dans notre cas, ils sont à égale distance du plan médian de la surface externe de l'éprouvette à une distance d'environ 5 millimètres. Ainsi l'écartement des points géométriques est de l'ordre du centimètre, ce qui est inférieur aux variations du profil de la surface externe de l'éprouvette tout en étant supérieur à la longueur de Rayleigh des premier et second faisceaux de lumière gaussiens.

La Fig. 5a montre l'évolution temporelle en amplitude de deux signaux. Le premier signal 101a est issus de la photodiode associée à la première source de lumière et le second signal 102a est issus de la photodiode associée à la seconde source de lumière. Ici, les interférences observées traduisent des modulations d'amplitude du signal temporel autour d'une porteuse. La succession des fronts est directement liée aux interférences qui évoluent avec la position des points d'impact des faisceaux de lumière sur la surface externe de la surface.

La Fig. 5b est le spectre fréquentiel des signaux temporels de la Fig. 5a pour chacun des signaux. Le premier spectre de réponse 101b se caractérise principalement par un massif centré sur la première fréquence Doppler. La seconde courbe 102b se caractérise par une succession d'harmoniques associées à la seconde fréquence Doppler. Les deux fréquences Doppler sont légèrement décalées en fréquence. Quelle que soit la réponse spectrale des signaux, la fréquence fondamentale porte la majorité de l'énergie du signal. De plus, on note une émergence sur chaque signal à très basse fréquence qui s'apparente à un mode structurel du dispositif ou du système de génération employé. En effet, cette émergence apparait sur les deux spectres. Par conséquent, la réponse temporelle est entachée de la signature du dispositif statique ou du système de mesure qu'il convient d'éliminer.

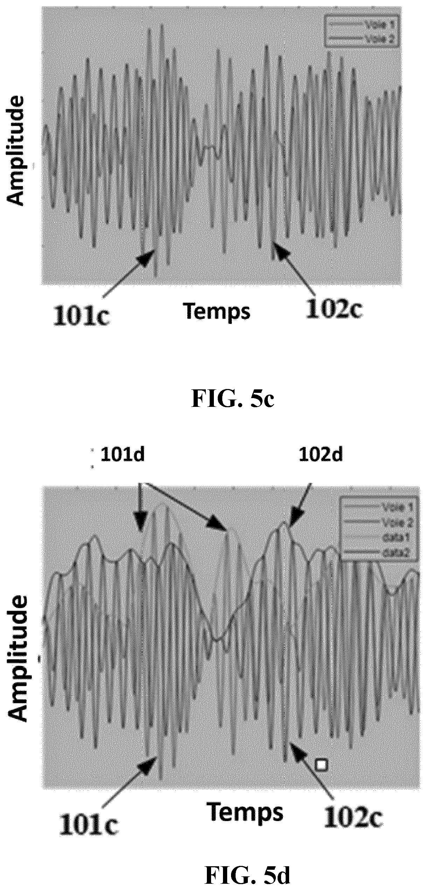

La Fig. 5c montre des signaux temporels 101c et 102c qui correspondent aux signaux 101a et 102a respectivement en filtrant ses signaux sur une bande de fréquence étroite autour de la fréquence fondamentale Doppler de chaque signal. Ces signaux temporels corrigés éliminent la contribution vibratoire du mode structurel du dispositif statique ou du système de mesure. La bande de fréquence est comprise entre 0,7 et 1,3 fois la fréquence Doppler, bien qu'une bande plus large aurait pu convenir, comme par exemple entre 0, 5 et 1, 5 fois la fréquence Doppler. La signature spectrale de chaque signal temporel avec des harmoniques de la fréquence Doppler peu sollicitées autorise une telle correction sans provoquer une perte d'information sur les interférences électromagnétiques observées par les photodiodes. Dans le cas où l'information est aussi portée par les harmoniques, il convient de prendre en compte les harmoniques par l'intermédiaire de l'étape de filtrage.

La Fig. 5d montre la définition des enveloppes 101d et 102d à partir des signaux temporels filtrés 101c et 102c. Ici, les enveloppes 101d et 102d sont construites sur les maximas des signaux temporels 101c et 102c.

Enfin, on reconstruit un profil de surface illustré à la Fig. 5c en combinant les enveloppes 101d et 102d obtenues précédemment. Les signaux temporels étant obtenus en phase lors de l'acquisition, aucune étape de correction spatiotemporelle n'est à effectuer sur les signaux temporels. Ici, la construction du profil se fait à chaque échantillon temporel, en faisant la différence des logarithmes des amplitudes des enveloppes 101d sur 102d. En raison de l'écartement des points géométriques et de la formation des waists du laser ; on entend par le terme anglais « waist » la largeur du faisceau laser au point de focalisation, aux points géométriques, une bijectivité de la combinaison précitée permet d'associer une unique distance D à chaque combinaison. La distance D est mesurée par rapport à n'importe quel point référence réel ou fictif du dispositif de mesure. Ici, pour le profil, seule la position relative d'un échantillon par rapport à un autre est intéressante, quel que soit le point de référence. La distance D est obtenue à partir d'une phase de calibration du dispositif de mesure employant une cible circulaire blanche dont la rugosité de surface est supérieure aux longueurs d'onde des premier et second faisceaux de lumière. La surface de type cylindrique présente une surface externe cylindrique dont le profil est évolutif avec le rayon du cylindre et invariant avec l'azimut du cylindre. La combinaison relative des enveloppes obtenues par le procédé correspondant à la fonction F bijective est alors comparée à l'altitude du profil de la cible.

La Fig. 5f est la reconstruction tridimensionnelle de l'éprouvette après post traitements des images obtenues par plusieurs caméras en statique et fonction d'un éclairage spécifique. Cette reconstruction est à comparer à l'image de la Fig. 5e. On note une vraisemblance des profils entre la mesure obtenue par le procédé et la reconstruction statique au niveau global et local. En effet les imperfections locales sont observables à l'ordre deux qui correspond à l'espacement entre deux cercles de mesure de l'éprouvette. Un simple lisage des points permet de s'affranchir de ce problème.

## Revendications

1. Procédé d'obtention du profil de la surface externe (22) d'un milieu (21) présentant un plan médian (23) comprenant les étapes suivantes :

   - Obtenir deux signaux temporels A et B (1002), issus d'un système de mesure (1) ayant une vitesse relative V suivant une direction U par rapport à une surface externe (22) présentant un plan médian (23), chaque signal étant le résultat des interférences électromagnétiques entre une onde incidente et son onde rétrodiffusée par la surface externe (22) suivant une ligne de lecture d'au moins une onde électromagnétique gaussienne, cohérente, directionnelle suivant au moins un parcours (11, 12) et focalisée en un point géométrique (d1, d2) sur le au moins un parcours (11, 12) , les deux points géométriques (d1 et d2) étant situés de part et d'autre du plan médian (23) et, la distance entre les deux points géométriques (d1 et d2) étant supérieure à la plus grande des longueurs de Rayleigh de chaque onde électromagnétique, par rapport à la normale au plan médian (23), l'angle d'incidence ($\theta_1$, $\theta_2$) de l'onde électromagnétique suivant chaque parcours (11, 12) sur la surface externe (22) étant supérieure à un degrés dans un plan défini par la normale au plan médian (23) et la direction U; pour une même cible géométrique sur la ligne de lecture de la surface externe (22), les deux signaux se différenciant en termes de fréquence Doppler s'ils sont issus d'une unique source de lumière, c'est-à-dire qu'ils n'ont pas le même angle d'incidence ($\theta_1$, $\theta_2$) sur le surface externe ;
   - Déterminer au moins une fréquence Doppler (2001) associée à chaque signal temporel A et B ;
   - Echantillonner chaque signal temporel A et B (2002) à une fréquence supérieure à 2 fois, préférentiellement 10 fois, la au moins une fréquence Doppler pour obtenir un signal utile ;
   - Déterminer une enveloppe (2004) du signal utile de chaque signal A et B ;
   - Effectuer une combinaison relative entre les enveloppes de chaque signal A et B (3001) pour obtenir une fonction F monotone et bijective ; et
- Déterminer le profil de la surface externe (3002) à l'aide d'une calibration de la fonction F.

2. Procédé d'obtention du profil de la surface externe (22) d'un milieu (21) selon la revendication 1 dans lequel la calibration de la fonction F s'effectue à l'aide d'au moins une cible blanche et rugueuse, dont la rugosité de surface est supérieure à la longueur d'onde des ondes électromagnétiques.

3. Procédé d'obtention du profil de la surface externe d'un milieu selon l'une des revendications 1et 2 dans lequel l'étape d'obtention de deux signaux temporels A et B (1002) pour la même cible géométrique de la ligne de lecture comprend les étapes suivantes :

- Obtenir deux signaux temporels A et B (1000) pour, à chaque instant, deux cibles géométriques sur la ligne de lecture de la surface externe (22) ;
- Etablir la distance X sur le plan médian suivant la direction U entre les deux cibles géométriques de la ligne de lecture ;
- Déterminer la vitesse relative V selon la direction U entre le système de mesure et la surface externe ;
- Déterminer la décalage temporel dT entre les deux signaux temporels associé à la distance X et la vitesse V ; et
- Appliquer au moins une partie du décalage temporel dT (1001) au signal temporel A et/ou au signal temporel B.

4. Procédé d'obtention du profil de la surface externe d'un milieu selon l'une des revendications 1 à 3 dans lequel l'étape de détermination de la fréquence Doppler (2001) s'effectue par

- Une transformée de Fourier du signal temporel ; ou
- L'application d'une formule théorique prenant en compte la vitesse relative V suivant la direction U entre le système de mesure et la surface externe, l'angle d'incidence θ du faisceau émis sur le plan médian de la surface externe et la longueur d'onde λ des ondes électromagnétiques définie comme suit :

[MATH1]

$$f = \frac{2*V*\sin(\theta)}{\lambda}$$ ;

ou
- Une analyse des signaux temporels pour détecter la période entre deux créneaux ou la longueur du créneau.

5. Procédé d'obtention du profil de la surface externe d'un milieu selon l'une des revendications 1 à 4 dans lequel l'étape de génération du signal utile (2002) comprend l'étape suivante :

- Filtrer par un fenêtrage fréquentiel chaque signal utile autour de la au moins une fréquence Doppler (2003) ;

6. Procédé d'obtention du profil de la surface externe d'un milieu selon la revendication 5 dans lequel l'étape de génération du signal utile (2002) emploie un fenêtrage fréquentiel entre 0,7 et 1,3 fois la fréquence Doppler.

7. Procédé d'obtention du profil de la surface externe d'un milieu selon l'une des revendications 1 et 6 dans lequel l'étape de détermination de l'enveloppe du signal utile (2004) s'effectuer sur la valeur absolue du signal utile.

8. Procédé d'obtention du profil de la surface externe d'un milieu selon l'une des revendications 1 et 7 dans lequel l'étape de détermination de l'enveloppe de chaque signal utile (2004) comprend une étape de nettoyage du bruit de tavelure (2005) sur l'enveloppe déterminée.

9. Procédé d'obtention du profil de la surface externe d'un milieu selon la revendication 8 dans lequel l'étape de nettoyage du bruit de tavelure (2005) sur l'enveloppe du signal utile comprend les étapes suivantes :

- Déterminer une taille de fenêtre temporelle et un taux de recouvrement entre des fenêtres contiguës associés à une méthode de filtrage sur le système de génération des signaux temporels A et B ;
- Découper l'enveloppe déterminée par un nombre entier N de fenêtres ;

- Déterminer une grandeur caractéristique à chaque fenêtre comme étant une moyenne des valeurs pondérées de l'enveloppe contenues dans ladite fenêtre ; et
- Définir l'enveloppe nettoyée de chaque signal comme étant la succession des grandeurs caractéristiques de chaque fenêtre.

10. Procédé d'obtention du profil de la surface externe d'un milieu selon la revendication 9 dans lequel la méthode de filtrage de l'étape de nettoyage du bruit de tavelure (2005) est compris dans le groupe comprenant GammaMAP et Sigma.

11. Procédé d'obtention du profil de la surface externe d'un milieu selon l'une des revendications 9 à 10 dans lequel la détermination de la taille temporelle des fenêtres de filtrage et le taux de recouvrement entre des fenêtres contiguës s'effectue lors d'une étape de la calibration du bruit de tavelure comprenant les étapes suivantes :

- Employer une cible blanche et rugueuse dont la rugosité de surface est supérieure à la longueur d'onde du premier et second faisceau de lumière.
- Pour au moins une position connue de la cible par rapport au système de génération du signal représentatif ;

- Déterminer l'enveloppe d'au moins un des signaux A et B ;
- Transformer l'enveloppe dans le domaine fréquentiel pour obtenir une distribution ;

- Moyenner la au moins une distribution pour définir une distribution gaussienne de tavelure lié au système de génération ;
- Définir au moins un bruit fréquentiel de tavelure comme le produit de la distribution gaussienne de tavelure par un bruit aléatoire uniformément distribué entre 0 et 1 ;
- Appliquer le au moins un bruit de tavelure à un profil théorique pour obtenir au moins un profil théorique bruité ; et
- Déterminer la taille de fenêtre temporelle et le taux de recouvrement en minimisant l'écart entre le profil théorique et le au moins un profil théorique bruité par analyse statistique.

12. Procédé d'obtention du profil de la surface externe d'un milieu selon l'une des revendications 1 à 11 dans lequel l'étape de combinaison relative des enveloppes (3001) comprend la différence des enveloppes exprimées en échelle logarithmique.


**Patentansprüche**

1. Verfahren zur Ermittlung des Profils der Außenoberfläche (22) eines Mediums (21), die eine Medianebene (23) aufweist, beinhaltend die folgenden Schritte:

- Ermitteln von zwei Zeitsignalen A und B (1002), die aus einem Messsystem (1) stammen, das in Bezug auf eine Außenoberfläche (22), die eine Medianebene (23) aufweist, eine relative Geschwindigkeit V gemäß einer Richtung U aufweist, wobei jedes Signal das Ergebnis der elektromagnetischen Interferenzen zwischen einer einfallenden Welle und einer durch die Außenoberfläche (22) rückgestreuten Welle gemäß einer Leselinie mindestens einer gaußschen, kohärenten, gerichteten elektromagnetischen Welle ist, die mindestens einem Weg (11, 12) folgt und auf einen geometrischen Punkt (d1, d2) auf dem mindestens einen Weg (11, 12) fokussiert ist, wobei sich die zwei geometrischen Punkte (d1 und d2) zu beiden Seiten der Medianebene (23) befinden und der Abstand zwischen den zwei geometrischen Punkten (d1 und d2) in Bezug auf die Normale zu der Medianebene (23) größer ist als die größte der Rayleigh-Längen jeder elektromagnetischen Welle, wobei der Einfallswinkel ($\theta_1$, $\theta_2$) der elektromagnetischen Welle, die jedem Weg (11, 12) folgt, auf die Außenoberfläche (22) in einer Ebene, die durch die Normale zu der Medianebene (23) und die Richtung U definiert wird, größer als ein Grad ist; wobei sich die zwei Signale für ein gleiches geometrisches Ziel auf der Leselinie der Außenoberfläche (22) in Bezug auf die Doppler-Frequenz unterscheiden, wenn sie aus einer einzigen Lichtquelle stammen, das heißt, dass sie nicht den gleichen Einfallswinkel ($\theta_1$, $\theta_2$) auf die Außenoberfläche aufweisen;
- Bestimmen mindestens einer Doppler-Frequenz (2001), die mit jedem Zeitsignal A und B assoziiert ist;
- Abtasten jedes Zeitsignals A und B (2002) mit einer Frequenz, die mehr als das 2-fache, vorzugsweise mehr als das 10-fache, der mindestens einen Doppler-Frequenz beträgt, um ein Nutzsignal zu ermitteln;
- Bestimmen einer Hüllkurve (2004) des Nutzsignals jedes Signals A und B;
- Durchführen einer relativen Kombination aus den Hüllkurven jedes Signals A und B (3001), um eine monotone und bijektive Funktion F zu ermitteln; und

    - Bestimmen des Profils der Außenoberfläche (3002) mit Hilfe einer Kalibrierung der Funktion F.

2.   Verfahren zur Ermittlung des Profils der Außenoberfläche (22) eines Mediums (21) nach Anspruch 1, wobei die Kalibrierung der Funktion F mit Hilfe mindestens eines weißen und rauen Ziels durchgeführt wird, dessen Oberflächenrauheit größer ist als die Wellenlänge der elektromagnetischen Wellen.

3.   Verfahren zur Ermittlung des Profils der Außenoberfläche eines Mediums nach einem der Ansprüche 1 und 2, wobei der Schritt des Ermittelns von zwei Zeitsignalen A und B (1002) für das gleiche geometrische Ziel der Leselinie die folgenden Schritte beinhaltet:

    - Ermitteln von zwei Zeitsignalen A und B (1000) für, zu jedem Zeitpunkt, zwei geometrische Ziele auf der Leselinie der Außenoberfläche (22);
    - Feststellen der Entfernung X auf der Medianebene gemäß der Richtung U zwischen den zwei geometrischen Zielen der Leselinie;
    - Bestimmen der relativen Geschwindigkeit V gemäß der Richtung U zwischen dem Messsystem und der Außenoberfläche;
    - Bestimmen des Zeitversatzes dT zwischen den zwei Zeitsignalen, der mit der Entfernung X und der Geschwindigkeit V assoziiert ist; und
    - Anwenden mindestens eines Teils des Zeitversatzes dT (1001) auf das Zeitsignal A und/oder das Zeitsignal B.

4.   Verfahren zur Ermittlung des Profils der Außenoberfläche eines Mediums nach einem der Ansprüche 1 bis 3, wobei der Schritt des Bestimmens der Doppler-Frequenz (2001) durch Folgendes durchgeführt wird:

    - eine Fourier-Transformation des Zeitsignals; oder
    - das Anwenden einer theoretischen Formel, die die relative Geschwindigkeit V gemäß der Richtung U zwischen dem Messsystem und der Außenoberfläche, den Einfallswinkel θ des auf die Medianebene der Außenoberfläche emittierten Strahls und die Wellenlänge λ der elektromagnetischen Wellen berücksichtigt und wie folgt definiert ist:

$$f = \frac{2 * V * \sin(\theta)}{\lambda} \; ;$$

oder
    - eine Analyse der Zeitsignale, um die Periode zwischen zwei Schlitzen oder die Länge des Schlitzes zu detektieren.

5.   Verfahren zur Ermittlung des Profils der Außenoberfläche eines Mediums nach einem der Ansprüche 1 bis 4, wobei der Schritt des Generierens des Nutzsignals (2002) den folgenden Schritt beinhaltet:

    - Filtern, durch eine Frequenzfensterung, jedes Nutzsignals um die mindestens eine Doppler-Frequenz (2003) herum.

6.   Verfahren zur Ermittlung des Profils der Außenoberfläche eines Mediums nach Anspruch 5, wobei der Schritt des Generierens des Nutzsignals (2002) eine Frequenzfensterung zwischen dem 0,7- und dem 1,3-fachen der Doppler-Frequenz einsetzt.

7.   Verfahren zur Ermittlung des Profils der Außenoberfläche eines Mediums nach einem der Ansprüche 1 und 6, wobei der Schritt des Bestimmens der Hüllkurve des Nutzsignals (2004) mit dem Absolutwert des Nutzsignals durchgeführt wird.

8.   Verfahren zur Ermittlung des Profils der Außenoberfläche eines Mediums nach einem der Ansprüche 1 und 7, wobei der Schritt des Bestimmens der Hüllkurve jedes Nutzsignals (2004) einen Schritt des Bereinigens des Speckle-Rauschens (2005) in der bestimmten Hüllkurve beinhaltet.

9.   Verfahren zur Ermittlung des Profils der Außenoberfläche eines Mediums nach Anspruch 8, wobei der Schritt des Bereinigens des Speckle-Rauschens (2005) in der Hüllkurve des Nutzsignals die folgenden Schritte beinhaltet:

- Bestimmen einer Größe eines Zeitfensters und einer Überlappungsrate zwischen aneinandergrenzenden Fenstern, die mit einem Filterverfahren für das System zur Generierung der Zeitsignale A und B assoziiert sind;
- Zerlegen der bestimmten Hüllkurve in eine ganze Anzahl N von Fenstern;
- Bestimmen einer Größe, die für jedes Fenster charakteristisch ist, als einen Mittelwert der gewichteten Werte der Hüllkurve, die in dem Fenster enthalten sind; und
- Definieren der bereinigten Hüllkurve jedes Signals als die Folge der charakteristischen Größen jedes Fensters.

10. Verfahren zur Ermittlung des Profils der Außenoberfläche eines Mediums nach Anspruch 9, wobei das Filterverfahren des Schritts des Bereinigens des Speckle-Rauschens (2005) in der Gruppe enthalten ist, die GammaMAP und Sigma beinhaltet.

11. Verfahren zur Ermittlung des Profils der Außenoberfläche eines Mediums nach einem der Ansprüche 9 bis 10, wobei das Bestimmen der zeitlichen Größe der Filterfenster und der Überlappungsrate zwischen aneinandergrenzenden Fenstern während eines Schritts der Kalibrierung des Speckle-Rauschens durchgeführt wird, der die folgenden Schritte beinhaltet:

- Einsetzen eines weißen und rauen Ziels, dessen Oberflächenrauheit größer ist als die Wellenlänge des ersten und zweiten Lichtstrahls;
- für mindestens eine bekannte Position des Ziels in Bezug auf das System zur Generierung des repräsentativen Signals;
- Bestimmen der Hüllkurve mindestens eines der Signale A und B;
- Transformieren der Hüllkurve im Frequenzbereich, um eine Verteilung zu ermitteln;
- Mitteln der mindestens einen Verteilung, um eine gaußsche Speckle-Verteilung zu definieren, die mit dem Generierungssystem verbunden ist;
- Definieren mindestens eines Speckle-Frequenzrauschens als das Produkt aus der gaußschen Speckle-Verteilung und einem zwischen 0 und 1 gleichmäßig verteilten Zufallsrauschen;
- Anwenden des mindestens einen Speckle-Rauschens auf ein theoretisches Profil, um mindestens ein verrauschtes theoretisches Profil zu ermitteln; und
- Bestimmen der Zeitfenstergröße und der Überlappungsrate durch Minimieren der Abweichung zwischen dem theoretischen Profil und dem mindestens einen verrauschten theoretischen Profil durch statistische Analyse.

12. Verfahren zur Ermittlung des Profils der Außenoberfläche eines Mediums nach einem der Ansprüche 1 bis 11, wobei der Schritt des relativen Kombinierens der Hüllkurven (3001) die Differenz der logarithmisch ausgedrückten Hüllkurven beinhaltet.

## Claims

1. Method for obtaining the profile of the outer surface (22) of a medium (21) having a median plane (23) comprising the following steps:

- Obtaining two time signals A and B (1002), from a measurement system (1) having a relative speed V in a direction U with respect to an outer surface (22) having a median plane (23), each signal being the result of the electromagnetic interferences between an incident wave and its wave backscattered by the outer surface (22) along a readout line of at least one electromagnetic wave that is Gaussian, coherent, directional along at least one path (11, 12) and focused at a geometrical point (d1, d2) on the at least one path (11, 12), the two geometrical points (d1, d2) being situated on either side of the median plane (23) and, the distance between the two geometrical points (d1, d2) being greater than the greatest of the Rayleigh lengths of each electromagnetic wave, with respect to the normal to the median plane (23), the angle of incidence ($\theta_1$, $\theta_2$) of the electromagnetic wave along each path (11, 12) on the outer surface (22) being greater than one degree in a plane defined by the normal to the median plane (23) and the direction U; for, at each instant, a same geometrical target on the readout line of the outer surface (22), the two time signals being differentiated in terms of Doppler frequency, when they are generated by the use of of a single electromagnetic wave source, i.e;the two time signals each associated with a wave path which are differentiated only by the angle of incidence ($\theta_1$, $\theta_2$) on the outer surface;
- Determining at least one Doppler frequency (2001) associated with each time signal A and B;
- Sampling each time signal A and B (2002) at a frequency greater than 2 times, preferentially 10 times, the at least one Doppler frequency to obtain a payload signal;
- Determining an envelope (2004) of the payload signal of each signal A and B;
- Performing a relative combination between the envelopes of each signal A and B (3001) to obtain a monotonic and bijective function F; and
- Determining the profile of the outer surface (3002) using a calibration of the function F.

2. Method for obtaining the profile of the outer surface (22) of a medium (21) according to Claim 1, wherein the calibration of the function F is performed using at least a white and rough target, the surface roughness of which is greater than the wavelength of the electromagnetic waves.

3. Method for obtaining the profile of the outer surface of a medium according to one of Claims 1 and 2, wherein the step of obtaining two time signals A and B (1002) for the same geometrical target of the readout line comprises the following steps:

- Obtaining two time signals A and B (1000) for, at each instant, two geometrical targets on the readout line of the outer surface (22);
- Establishing the distance X on the median plane in the direction U between the two geometrical targets of the readout line;
- Determining the relative speed V in the direction U between the measurement system and the outer surface;
- Determining the temporal offset dT between the two time signals associated with the distance X and the speed V; and
- Applying at least a part of the temporal offset dT (1001) to the time signal A and/or to the time signal B.

4. Method for obtaining the profile of the outer surface of a medium according to one of Claims 1 to 3, wherein the step of determining the Doppler frequency (2001) is performed by

- A Fourier transform of the time signal; or
- The application of a theoretical formula taking account of the relative speed V in the direction U between the measurement system and the outer surface, the angle of incidence $\theta$ of the beam transmitted on the median plane of the outer surface and the wavelength $\lambda$ of the electromagnetic waves defined as follows:

$$f = \frac{2*V*\sin(\theta)}{\lambda}$$
;

or
- An analysis of the time signals to detect the period between two pulses or the pulse length.

5. Method for obtaining a profile of the outer surface of a medium according to one of Claims 1 to 4, wherein the step of generation of the payload signal (2002) comprises the following step:

- Filtering, by frequency windowing, each payload signal around the at least one Doppler frequency (2003).

6. Method for obtaining the profile of the outer surface of a medium according to Claim 5, wherein the step of generation of the payload signal (2002) employs a frequency windowing between 0.7 and 1.3 times the Doppler frequency.

7. Method for obtaining the profile of the outer surface of a medium according to one of Claims 1 and 6, wherein the step of determining the envelope of the payload signal (2004) is performed on the absolute value of the payload signal.

8. Method for obtaining the profile of the outer surface of a medium according to one of Claims 1 and 7, wherein the step of determining the envelope of each payload signal (2004) comprises a step of cleaning of the speckle noise (2005) on the determined envelope.

9. Method for obtaining the profile of the outer surface of a medium according to Claim 8, wherein the step of cleaning of the speckle noise (2005) on the envelope of the payload signal comprises the following steps:

- Determining a time window size and a level of overlap between the contiguous windows associated with a filtering method on the system for generating the time signals A and B;

- Subdividing the determined envelope by an integer number N of windows;
- Determining a quantity characteristic to each window as being an average of the weighted values of the envelope contained in said window; and
- Defining the cleaned envelope of each signal as being the succession of the characteristic quantities of each window.

10. Method for obtaining the profile of the outer surface of a medium according to Claim 9, wherein the filtering method of the step of cleaning of the speckle noise (2005) is contained within the group comprising GammaMAP and Sigma.

11. Method for obtaining the profile of the outer surface of a medium according to one of Claims 9 and 10, wherein the determination of the temporal size of the filtering windows and the level of overlap between the contiguous windows is performed in a step of calibration of the speckle noise comprising the following steps:

- Employing a white and rough target whose surface roughness is greater than the wavelength of the first and second light beam.
- For at least one known position of the target with respect to the system for generating the representative signal;

  - Determining the envelope of at least one of the signals A and B;
  - Transforming the envelope into the frequency domain to obtain a distribution;

- Averaging the at least one distribution to define a Gaussian distribution of speckle linked to the generation system;
- Defining at least one speckle frequency noise as the product of the Gaussian distribution of speckle by a random noise uniformly distributed between 0 and 1;
- Applying the at least one speckle noise to a theoretical profile to obtain at least one noisy theoretical profile; and
- Determining the size of the time window and the level of overlap by minimizing the difference between the theoretical profile and the at least one noisy theoretical profile through statistical analysis.

12. Method for obtaining the profile of the outer surface of a medium according to one of Claims 1 to 11, wherein the step of relative combination of the envelopes (3001) comprises the difference between the envelopes expressed on a logarithmic scale.

**FIG. 1**

**FIG. 2**

**FIG. 3**

*Préparation des signaux*

> Obtention de deux signaux temporels A et B pour une même ligne de lecture d'une surface externe
>
> 1000

> Correction temporelle des signaux déphasés spatialement et temporellement
>
> 1001

> Obtention de deux signaux temporels A et B pour le même point géométrique de la surface externe
>
> 1002

*Mise en forme des données*

> Déterminer la fréquence Doppler de chaque signal A et B
>
> 2001

> Echantillonner chaque signal A et B a une fréquence supérieure à 2 fois la fréquence Doppler pour obtenir un signal utile
>
> 2002

> Filtrer chaque signal temporel autour de la fréquence Doppler
>
> 2003

> Déterminer l'enveloppe de chaque signal temporel utile
>
> 2004

> Nettoyer le bruit de speckle sur chaque enveloppe déterminée
>
> 2005

*Evaluation*

> Combiner en relatif les enveloppes de chaque signal utile A et B pour obtenir une fonction F
>
> 3001

> Déterminer le profil de la surface externe suivant la ligne de lecture à l'aide d'une calibration de la fonction F
>
> 3002

# FIG. 4

**FIG. 5a**

**FIG. 5b**

**FIG. 5c**

**FIG. 5d**

**FIG. 5e**

**FIG. 5f**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011126617 A1
- EP 3035001 A1